# NEUE EUROPÄISCHE PATENTSCHRIFT

(11) **EP 3 115 336 B2**
(45) Veröffentlichungstag und Bekanntmachung des Hinweises auf die Entscheidung über den Einspruch: **05.01.2022**
(45) Hinweis auf die Patenterteilung: 28.02.2018
(21) Anmeldenummer: 15400030.1
(22) Anmeldetag: 10.07.2015
(51) Int. Cl.: C01B 3/38, C01B 3/48, C01B 3/50

(54) **VERFAHREN UND ANLAGE ZUR KÜHLUNG VON SYNTHESEGAS**
METHOD AND PLANT FOR THE COOLING OF SYNTHESIS GAS
INSTALLATION ET PROCEDE DE REFROIDISSEMENT DE GAZ DE SYNTHESE

(43) Veröffentlichungstag der Anmeldung: 11.01.2017
(73) Patentinhaber: L'Air Liquide Société Anonyme pour l'Etude et l'Exploitation des Procédés Georges Claude, 75007 Paris (FR)
(72) Erfinder: Chen, Yue, D-60326 Frankfurt (DE); Tadiello, Jean-Philippe, D-60431 Frankfurt (DE)
(74) Vertreter: Stang, Stefan

(56) Entgegenhaltungen:
- EP-A1- 2 233 433
- EP-A1- 2 865 638
- US-A- 3 297 408
- US-A1- 2003 110 694
- US-A1- 2009 232 729
- US-A1- 2011 146 991
- Broschure 'Hydrogen' von Linde
- Schoerner Wolfgang: "Technological and economic Considerations for Specific Hydrogen Demand", Cryogas International,
- Maruoka n. et al: "Exergy Analysis of Methane Steam Reformer Utilizing Steelmaking Waste Heat", ISIJ International, vol. 50, no. 9, 2010, pages 1311-1318,

## Beschreibung

### Gebiet der Erfindung

Die Erfindung betrifft ein Verfahren und eine Anlage zur Abkühlung eines durch katalytische Dampfreformierung eines kohlenwasserstoffhaltigen Einsatzgases sowie durch nachfolgende katalytische Kohlenmonoxid-Konvertierung erzeugten Synthesegases unter Abtrennung des dabei entstandenen wässrigen Kondensats, wobei die Abkühlung erfolgt, indem das Gas mehrere, hintereinandergeschaltete Abkühlungsstufen durchläuft, wobei die Abkühlung den Wärmeaustausch mit dem Einsatzgas, mit entgastem und nicht entgastem Kesselspeisewasser für die Erzeugung des für die Dampfreformierung benötigten Dampfes und mit Umgebungsluft umfasst und wobei nach der letzten Abkühlungsstufe entstandenes Kondensat aus dem Gas abgetrennt und das Gas zur weiteren Behandlung ausgeleitet wird.

### Stand der Technik

Verfahren zur Erzeugung von Wasserstoff und Kohlenmonoxid enthaltendem Synthesegas mittels katalytischer Dampfreformierung eines kohlenwasserstoffhaltigen Einsatzgases sind bekannt und beispielsweise in Ullmann's Encyclopedia of Industrial Chemistry, Sixth Edition, Vol. 15, Gas Production, Chapter 2. beschrieben. Die Einsatzgase, ein kohlenwasserstoffhaltiges Gas, wie z. B. Erdgas und Wasserdampf, werden dabei bei erhöhtem Druck, z. B. 20 bis 35 bar, und hoher Temperatur, z. B. 800 bis 950°C, durch von außen beheizte, mit Katalysator gefüllte Reaktorrohre geleitet. Dabei werden die Einsatzgase in wasserstoff- und kohlenmonoxidreiches Synthesegas umgewandelt. Ein derartiger Reaktor wird häufig als SMR und das Verfahren als SMR-Verfahren bezeichnet, abgekürzt für Steam-Methane-Reformer. Für die Wirtschaftlichkeit des Verfahrens ist es sehr wichtig, einen möglichst effektiven Wärmeaustausch zwischen dem aus dem SMR austretenden Synthesegas und dem Einsatzgasen durchzuführen.

Nachdem das erzeugte Synthesegas den SMR verlassen hat, wird es durch Wärmeaustausch mit Kesselspeisewasser abgekühlt. Das Kesselspeisewasser wird dabei verdampft. Der Dampf wird als Einsatzdampf für das SMR-Verfahren verwendet und überschüssiger Dampf wird als sogenannter Exportdampf zur Verwendung außerhalb des SMR-Verfahrens ausgeleitet. Wenn als Endprodukt des SMR-Verfahrens ein ausschließlich aus Wasserstoff bestehendes Synthesegas erzeugt werden soll, dann wird das Synthesegas anschließend in einer Anlage zur katalytischen Konvertierung behandelt, in der das Kohlenmonoxid mit Wasserdampf in Wasserstoff und Kohlendioxid umgewandelt wird. Diese Konvertierung ist im oben erwähnten Ullmann-Band auf Seite 382 ff. beschrieben.

Das erfindungsgemäße Verfahren betrifft die, sich an die bisher beschriebenen Schritte anschließende, weitere Abkühlung des Synthesegases.

Dabei wird das Synthesegas zunächst durch Wärmeaustausch mit dem kohlenwasserstoffhaltigen Einsatzgas weiter abgekühlt. Anschließend erfolgt eine weitere Abkühlung durch Wärmeaustausch mit entgastem Kesselspeisewasser, das anschließend dem Verdampfer zugeführt wird, dann durch Beheizung der Kesselspeisewasserentgasungsanlage und zur Vorheizung des frischen Kesselspeisewassers, vor dessen Einleitung in die Entgasungsanlage. Die Entgasung erfolgt rein physikalisch durch Erwärmung des Kesselspeisewassers. Daran anschließend wird das Synthesegas durch einen Luftkühler und dann durch einen mit Kühlwasser betriebenen Kühler bis nahezu auf Umgebungstemperatur abgekühlt. Dann wird in einem Kondensatabscheider das in den vorangegangenen Abkühlungsstufen gebildete Kondensat aus dem Synthesegas abgetrennt und das Synthesegas zur weiteren Behandlung geleitet. Das Kondensat wird verfahrensintern zur Dampferzeugung verwendet. Je nach Reinheit des Kondensats und den Reinheitsanforderungen an den Exportdampf wird es entweder vom frischen Kesselspeisewasser getrennt gehalten, in einem separaten Verdampfer zu Einsatzdampf verdampft oder es wird in die Kesselspeisewasserentgasungsanlage geleitet und dort mit dem frischen Kesselspeisewasser vermischt.

Nachteilig an diesem Verfahren nach dem Stand der Technik ist, dass das Kondensat mit Umgebungstemperatur aus dem Synthesegas abgeschieden wird und dementsprechend viel Wärmeenergie zu seiner Aufheizung zur Verdampfung aufgewendet werden muss.

### Beschreibung der Erfindung

Aufgabe der Erfindung ist es daher, ein Verfahren zur Verfügung zu stellen, bei dem weniger Wärmeenergie zur Aufheizung des Kondensats aufgewendet werden muss.

Die Aufgabe wird gelöst durch die Erfindung gemäß den Merkmalen des Anspruch 1:

### Erfindungsgemäßes Verfahren:

Verfahren zur Abkühlung eines durch katalytische Dampfreformierung eines kohlenwasserstoffhaltigen Einsatzgases erzeugten Synthesegases, das durch Wärmeaustausch mit Kesselspeisewasser zu dessen Umwandlung in Dampf, unter Abtrennung des dabei entstandenen wässrigen Kondensats, abgekühlt und in einer Anlage zur katalytischen Konvertierung von Kohlenmonoxid mit Wasserdampf in Wasserstoff und Kohlendioxid behandelt wurde, wobei die Abkühlung erfolgt, indem das Gas mehrere, hintereinandergeschaltete Abkühlungsstufen durchläuft und dabei den Wärmeaustausch mit dem Einsatzgas, mit entgastem und nicht entgastem Kesselspeisewasser für die Erzeugung des für die Dampfreformierung benötigten Dampfes und mit Umgebungsluft umfasst und wobei nach der letzten Abkühlungsstufe entstandenes, abgekühltes Kondensat aus dem Gas abgetrennt und das Gas zur weiteren Behandlung ausgeleitet wird, wobei mindestens nach einer weiteren, der letzten Abkühlungsstufe vorgelagerten Abkühlungsstufe, ein weiteres heißes wässriges Kondensat aus dem Gas abgeschieden wird. Erfindungsgemäß ist vorgesehen, dass die in Flussrichtung des Synthesegases erste Abkühlungsstufe durch Wärmeaustausch mit dem Einsatzgas, die zweite Stufe durch Wär-meaustausch mit entgastem Kesselspeisewasser, die dritte Stufe durch Wärmeaustausch mit der Umgebungsluft mittels eines Luftkühlers und die letzte Stufe durch Wärmeaustausch mit dem nicht entgastem Kesselspeisewasser dargestellt wird und
das heiße wässrige Kondensat nach dem Wärmeaustausch mit der Umgebungsluft aus dem Synthesegas abgeschieden wird.

### Erfindungsgemäße Anlage.

Dem Teil des Kondensats, der schon vor der letzten Abkühlungsstufe aus dem Synthesegas abgetrennt wird, wird weniger Wärmeenergie entzogen und man benötigt dementsprechend weniger Wärmeenergie zu dessen Aufheizung. Durch die Reihenfolge der Abkühlungsstufen wird die im Synthesegas enthaltende Wärmeenergie wirkungsvoll auf die Einsatzströme von Gas und Wasser übertragen. Die Reihenfolge der Abkühlungsschritte kann im Einzelfall der zu planenden und zu betreibenden Anlage an die jeweils vorliegenden Randbedingungen angepasst werden. Das heiße wässrige Kondensat wird nach dem Wärmeaustausch mit der Umgebungsluft aus dem Synthesegas abgeschieden. An dieser Stelle ist das Kondensat soweit abgekühlt, dass es ohne zu großen technischen Aufwand weiterverwendet und gepumpt werden kann. Außerdem ist die Menge an angefallenem Kondensat und seine Temperatur an dieser Stelle hoch genug, um im wirtschaftlich interessanten Umfang Energie zum Kühlen und Wiederaufheizen des Kondensats zu sparen.

### Bevorzugte Ausgestaltungen der Erfindung

Eine besondere Ausgestaltung der Erfindung ist dadurch gekennzeichnet, dass alle zur Abkühlung des Synthesegases verwendeten Kühlwässer nachfolgend als Kesselspeisewasser benutzt werden. Das erfindungsgemäß abgetrennte heiße Kondensat wird nicht abgekühlt. Dadurch kann der nach dem bisherigen Stand der Technik verwendete, mit Kühlwasser betriebene Wärmetauscher zur Abkühlung des Synthesegases auf Umgebungstemperatur entfallen. Eventuell ist eine geringfügige Anpassung der vorgelagerten Wärmetauscher erforderlich. Der Verzicht auf die Verwendung von Kühlwasser, das nicht als Kesselspeisewasser verwendet wird und somit zur Erzeugung von Dampf dient, ist besonders bei Anlagenstandorten in wasserarmen Ländern sehr vorteilhaft. Außerdem entfallen die Kosten und der Platzbedarf für den Kühlwasserkreislauf, sowie für Pumpen und einen Kühlturm.

Eine weitere besondere Ausgestaltung der Erfindung ist dadurch gekennzeichnet, dass beide aus dem Synthesegas abgeschiedene Kondensate der Kesselspeisewasserentgasung zugeführt und dort mit frischem, durch Wärmeaustausch mit dem Synthesegas vorgeheiztem Kesselspeisewasser zusammengeführt werden. Bei dieserVorgehensweise wird in Kauf genommen, dass Verunreinigungen, mit denen das Kondensat immer belastet ist, ins Kesselspeisewasser und damit auch in den erzeugten Exportdampf gelangen. Dies ist nur möglich, wenn die Verwendung des Exportdampfs dies zulässt. Der Vorteil dieser Vorgehensweise liegt darin, dass eine separate Dampferzeugung, nur aus Kondensat, entfällt und damit Kosten und Platz gespart werden.

Eine weitere besondere Ausgestaltung der Erfindung ist dadurch gekennzeichnet, dass die Wärmeenergie für die Kesselspeisewasserentgasung mindestens zum Teil durch Wärmeaustausch des im Entgaser befindlichen Kesselspeisewassers mit dem abzukühlenden Synthesegas geliefert wird. Bei dieser Variante wird das Kesselspeisewasser nicht nur vor und nach der Entgasung durch das Synthesegas aufgeheizt sondern auch während der Entgasung. Dies ist eine Alternative dazu, das Kesselspeisewasser bei der Entgasung durch Einspeisung von prozessintern erzeugtem Dampf zu beheizen.

### Ausführungsbeispiel

Weitere Merkmale, Vorteile und Anwendungsmöglichkeiten der Erfindung ergeben sich auch aus der nachfolgenden Beschreibung eines Ausführungs- und Zahlenbeispiels und der Zeichnung.

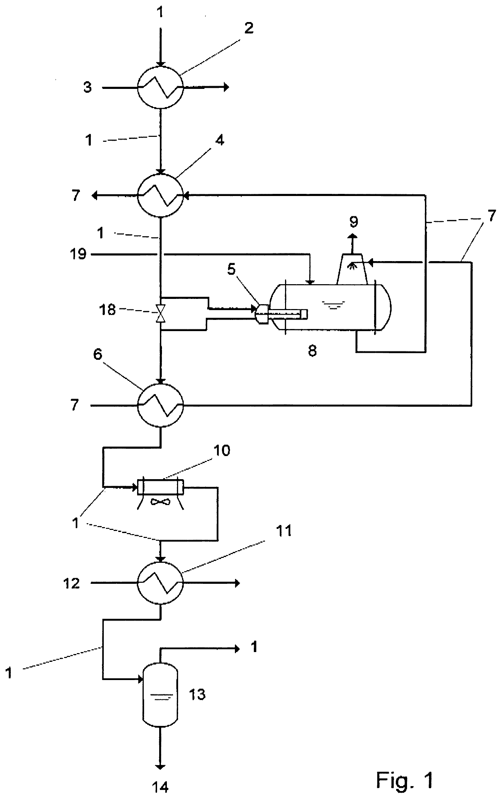

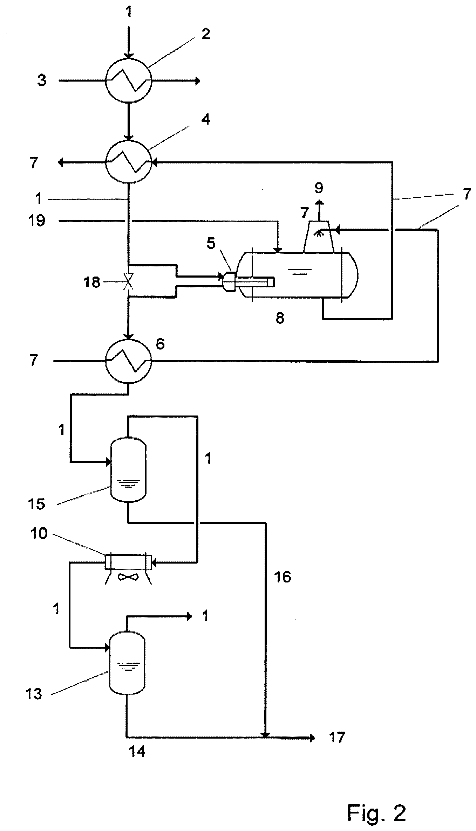

Das erfindungsgemäße Verfahren soll im Folgenden anhand der Zeichnungen Fig. 1 und 2 erläutert werden. Dabei zeigen:
- Fig. 1 und Fig. 2: jeweils ein Fließbild des Stands der Technik, siehe z.B. US 2009/0232729 A1, US 2011/0146991 A1 oder EP 2 865 638 A1
- Fig. 3: ein Fließbild einer beispielhaften Ausführung der Erfindung

### Fig. 1:

Das Synthesegas 1 ist durch Wärmeaustausch und Verdampfung von Kesselspeisewasser zu Einsatzdampf und Exportdampf (in Fig. 1 bildlich nicht dargestellt) auf eine Temperatur von 360°C abgekühlt und wird in Wärmetauscher 2 eingeleitet. Dort gibt es Wärme an den Erdgasstrom 3 ab, der als Einsatzgas der Dampfreformierung (bildlich nicht dargestellt) zugeleitet wird. Das Synthesegas 1 wird dann durch die Wärmetauscher 4, 5 und 6 geleitet und erwärmt dadurch aus Frischwasser erzeugtes Kesselspeisewasser 7. Der Wärmetauscher 5, der zur Beheizung des Entgasers 8 dient, kann durch den Bypass 18 umgangen werden. Der Entgaser 8 kann dann, über die Leitung 19, mit Dampf aus einer verfahrensexternen Quelle beheizt werden. Das Kesselspeisewasser 7 wird im Entgaser 8 physikalisch, d. h. durch Erwärmen, entgast. Die ausgetriebenen Gase 9 werden aus dem Entgaser 8 ausgeleitet und der weiteren Behandlung (bildlich nicht dargestellt) zugeführt. Nachdem das entgaste Kesselspeisewasser 7 in Wärmetauscher 4 weiter aufgeheizt wurde, wird es der Verdampfung (bildlich nicht dargestellt) zugeführt, wobei es zu Einsatzdampf für die Dampfreformierung umgewandelt wird. Vom Wärmetauscher 6 wird das Synthesegas 1 dem Luftkühler 10 zugeleitet, in dem es durch Wärmeabgabe an die Umgebungsluft weiter abgekühlt wird. Dann wird das Synthesegas 1 mit Kühlwasser 12 in Wärmetauscher 11 weiter, bis nahe an die Umgebungstemperatur, beispielsweise 40°C, abgekühlt. Das Synthesegas 1 wird dann durch den Kondensatabscheider 13 geleitet. Das aus dem Synthesegas 1 abgeschiedene Kondensat 14 wird der weiteren Verwendung (bildlich nicht dargestellt) zugeleitet. Die weitere Verwendung besteht in vielen Fällen darin, dass das Kondensat 14 zur Erzwugung von Einsatzdampf für die Dampfreformierung verwendet wird.

Das Synthesegas 1 wird, nach der Kondensatabscheidung 13, der weiteren Behandlung (nicht dargestellt) zugeleitet.

### Fig.2:

Fig. 2 zeigt eine zusätzliche Kondensatabscheidung mittels Kondensatabscheider 15 aus dem Synthesegas 1, nachdem dieses in Wärmetauscher 6 auf ca. 95°C abgekühlt wurde. Das dabei abgeschiedene Kondensat 16 hat ebenfalls eine Temperatur von 95°C. Das Synthesegas 1 wird, nach der Kondensatabscheidung in Luftkühler 10' bis auf nahe Umgebungstemperatur abgekühlt. Anschließend wird in Kondensatabscheider 13 das in diesem letzten Abkühlungsschritt entstandene Kondensat 14 aus dem Synthesegas 1 abgetrennt. Der mit Kühlwasser betriebene Wärmetauscher ist entfallen. Die Ströme des kalten Kondensats 14 und des heißen Kondensats 16 werden zusammengeführt und als Kondensatstrom 17 der Verdampfung zu Einsatzdampf (bildlich nicht dargestellt) zugeführt.

### Fig. 3:

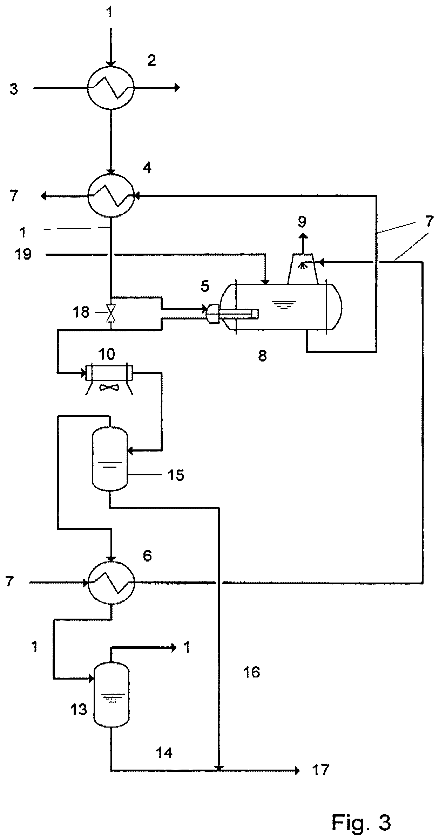

Fig. 3 zeigt eine erfindungsgemäße Abkühlung des Synthesegases. Gegenüber der Ausführung in Fig. 2 ist lediglich die Reihenfolge der letzten beiden Abkühlungsschritte vertauscht, d. h. nachdem das Synthesegas den Entgaser 8 beheizt hat wird es mit einem Luftkühler 10 gekühlt und dann, im letzten Abkühlungsschritt, erfolgt der Wärmeaustausch gegen noch nicht entgastes Kesselspeisewasser, das anschließend dem Entgaser 8 zugeführt wird.

In besonderer Ausgestaltung der Erfindung gemäß Fig. 3 kann auf den Wärmeaustausch des abzukühlenden Synthesegases mit dem Kesselspeisewasser im Entgaser auch verzichtet werden (bildlich nicht dargestellt). Dies kann durch Betätigen des Bypass 18 oder sogar durch Verzicht auf den Wärmetauscher 5 erfolgen. Auf diese Weise kann ein noch heißeres Kondensat gewonnen werden, dessen Wärmeenergie noch besser wiedergewonnen oder weiterverwendet werden kann. Zudem verringern sich bei Verzicht auf den Wärmetauscher 5 die Investitionskosten.

### Gewerbliche Anwendbarkeit

Die Erfindung führt zu einer Energie- und Investitionskosteneinsparung bei dem gewerblich vielfach eingesetzten Verfahren zur weiteren Abkühlung von Synthesegas dar. Es ist damit gewerblich anwendbar.

### Bezugszeichenliste

- 1: Synthesegas
- 2: Wärmetauscher
- 3: Erdgas
- 4: Wärmetauscher
- 5: Wärmetauscher
- 6: Wärmetauscher
- 7: Kesselspeisewasser, frisch
- 8: Entgaser
- 9: Ausgetriebene Gase
- 10: Luftkühler
- 11: Wärmetauscher
- 12: Kühlwasser
- 13: Kondensatabscheider
- 14: Kondensat
- 15: Kondensatabscheider
- 16: Kondensat
- 17: Kondensat
- 18: Bypass mit Ventil
- 19: Dampf

## Patentansprüche

1. Verfahren zur Abkühlung eines durch katalytische Dampfreformierung eines kohlenwasserstoffhaltigen Einsatzgases erzeugten Synthesegases, das durch Wärmeaustausch mit Kesselspeisewasser zu dessen Umwandlung in Dampf, unter Abtrennung des dabei entstandenen wässrigen Kondensats, abgekühlt und in einer Anlage zur katalytischen Konvertierung von Kohlenmonoxid mit Wasserdampf in Wasserstoff und Kohlendioxid behandelt wurde, wobei die Abkühlung erfolgt, indem das Gas mehrere, hintereinandergeschaltete Abkühlungsstufen durchläuft und dabei den Wärmeaustausch mit dem Einsatzgas (3), mit entgastem und nicht entgastem Kesselspeisewasser (7) für die Erzeugung des für die Dampfreformierung benötigten Dampfes und mit Umgebungsluft umfasst und wobei nach der letzten Abkühlungsstufe entstandenes, abgekühltes Kondensat (14) aus dem Gas (17) abgetrennt und das Gas (17) zur weiteren Behandlung ausgeleitet wird,
wobei mindestens nach einer weiteren, der letzten Abkühlungsstufe vorgelagerten Abkühlungsstufe, ein weiteres heißes wässriges Kondensat (16) aus dem Gas abgeschieden wird,
**dadurch gekennzeichnet, dass**
die in Flussrichtung des Synthesegases erste Abkühlungsstufe (2) durch Wärmeaustausch mit dem Einsatzgas (3), die zweite Stufe (4) durch Wärmeaustausch mit entgastem Kesselspeisewasser (7), die dritte Stufe (10) durch Wärmeaustausch mit der Umgebungsluft mittels eines Luftkühlers (10) und die letzte Stufe (6) durch Wärmeaustausch mit dem nicht entgastem Kesselspeisewasser (7) dargestellt wird und
das heiße wässrige Kondensat (16) nach dem Wärmeaustausch mit der Umgebungsluft aus dem Synthesegas (1) abgeschieden wird.

2. Verfahren nach Anspruch 1, **dadurch gekennzeichnet, dass** alle zur Abkühlung des Synthesegases verwendeten Kühlwässer nachfolgend als Kesselspeisewasser benutzt werden.

3. Verfahren nach einem der vorhergehenden Ansprüche, **dadurch gekennzeichnet, dass** beide aus dem Synthesegas (1) abgeschiedene Kondensate (14,16) der Kesselspeisewasserentgasung zugeführt und dort mit frischem, durch Wärmeaustausch mit dem Synthesegas vorgeheiztem Kesselspeisewasser zusammengeführt werden.

4. Verfahren nach einem der vorhergehenden Ansprüche, **dadurch gekennzeichnet, dass** die Wärmeenergie für die Kesselspeisewasserentgasung mindestens zum Teil durch Wärmeaustausch des im Entgaser (8) befindlichen Kesselspeisewassers (7) mit dem abzukühlenden Synthesegas (1) geliefert wird.

## Claims

1. Method for cooling a synthesis gas which has been produced by catalytic steam reforming of a hydrocarbon-containing feed gas and has been cooled by heat exchange with boiler feed water for the conversion of the latter into steam, with removal of the aqueous condensate formed, and treated in a plant for the catalytic conversion of carbon monoxide by means of steam into hydrogen and carbon dioxide, where the cooling is carried out by the gas passing through a plurality of cooling stages connected in series and comprises heat exchange with the feed gas (3), with degassed and undegassed boiler feed water (7) for production of the steam required for steam reforming and with ambient air and where cooled condensate (14) formed after the last cooling stage is separated off from the gas (17) and the gas (17) is discharged for the further treatment,
wherein at least after a further cooling stage preceding the last cooling stage, a further hot aqueous condensate (16) is separated from the gas, **characterized in that**
the first cooling stage (2) in the flow direction of the synthesis gas comprises heat exchange with the feed gas (3), the second stage (4) comprises heat exchange with degassed boiler feed water (7), the third stage (10) comprises heat exchange with the ambient air by means of an air cooler (10) and the last stage (6) comprises heat exchange with the undegassed boiler feed water (7), and
the hot aqueous condensate (16) is separated from the synthesis gas (1) after heat exchange with the ambient air.

2. Method according to Claim 1, **characterized in that** all cooling waters used for cooling the synthesis gas are subsequently utilized as boiler feed water.

3. Method according to either of the preceding claims, **characterized in that** both condensates (14, 16) separated from the synthesis gas (1) are fed to the boiler feed water degassing and are combined there with fresh boiler feed water which has been preheated by heat exchange with the synthesis gas.

4. Method according to any of the preceding claims, **characterized in that** the heat energy for the boiler feed water degassing is supplied at least partly by heat exchange of the boiler feed water (7) present in the degasser (8) with the synthesis gas (1) to be cooled.

## Revendications

1. Procédé de refroidissement d'un gaz de synthèse formé par reformage à la vapeur catalytique d'un gaz de départ contenant des hydrocarbures, qui a été refroidi par échange de chaleur avec de l'eau d'alimentation de chaudière pour sa transformation en vapeur, avec séparation du condensat aqueux ainsi formé, et traité dans une unité pour la conversion catalytique de monoxyde de carbone avec de la vapeur d'eau en hydrogène et dioxyde de carbone, le refroidissement ayant lieu par passage du gaz dans plusieurs étapes de refroidissement en série et comprenant l'échange de chaleur avec le gaz de départ (3), avec de l'eau d'alimentation de chaudière (7) dégazée et non dégazée pour la formation de la vapeur nécessaire pour le reformage à la vapeur, et avec de l'air ambiant, et le condensat refroidi (14) formé après la dernière étape de refroidissement étant séparé du gaz (17) et le gaz (17) étant acheminé vers un traitement supplémentaire,
un condensat aqueux chaud supplémentaire (16) étant séparé du gaz au moins après une étape de refroidissement supplémentaire en amont de la dernière étape de refroidissement,
**caractérisé en ce que** la première étape de refroidissement (2) dans la direction d'écoulement du gaz de synthèse est réalisée par échange de chaleur avec le gaz de départ (3), la deuxième étape (4) par échange de chaleur avec l'eau d'alimentation de chaudière dégazée (7), la troisième étape (10) par échange de chaleur avec l'air ambiant au moyen d'un refroidisseur à air (10), et la dernière étape (6) par échange de chaleur avec l'eau d'alimentation de chaudière non dégazée (7) et le condensat aqueux chaud (16) est séparé du gaz de synthèse (1) après l'échange de chaleur avec l'air ambiant.

2. Procédé selon la revendication 1, **caractérisé en ce que** toutes les eaux de refroidissement utilisées pour le refroidissement du gaz de synthèse sont par la suite utilisées en tant qu'eau d'alimentation de chaudière.

3. Procédé selon l'une quelconque des revendications précédentes, **caractérisé en ce que** les deux condensats (14, 16) séparés du gaz de synthèse (1) sont introduits dans le dégazage de l'eau d'alimentation de chaudière et y sont rassemblés avec de l'eau d'alimentation de chaudière fraîche préchauffée par échange de chaleur avec le gaz de synthèse.

4. Procédé selon l'une quelconque des revendications précédentes, **caractérisé en ce que** l'énergie thermique pour le dégazage de l'eau d'alimentation de chaudière est fournie au moins en partie par échange de chaleur de l'eau d'alimentation de chaudière (7) se trouvant dans le dégazeur (8) avec le gaz de synthèse à refroidir (1).
